# EUROPÄISCHE PATENTANMELDUNG

(11) **EP 4 663 988 A1**
(43) Veröffentlichungstag der Anmeldung: **17.12.2025**
(21) Anmeldenummer: 25190982.6
(22) Anmeldetag: 12.06.2023
(51) Int. Cl.: F16K 17/16, B65D 90/36

(54) **ECKIGE, INSBESONDERE RECHTECKIGE BERSTSCHEIBE**

(62) Teilanmeldung aus: 23178734.2
(71) Anmelder: Rembe GmbH Safety + Control, 59929 Brilon (DE)
(72) Erfinder: Füller, Michael, 33104 Paderborn (DE); Penno, Stefan, 59929 Brilon (DE)
(74) Vertreter: Fritz Patent- und Rechtsanwälte PartmbB

(57) **Zusammenfassung**

Die Erfindung betrifft eine eckige, insbesondere rechteckige Berstscheibe (1), die aus einem Blech hergestellt ist, mit einem Randbereich (11), mit dem die Berstscheibe (1) an einer Öffnung eines Behälters oder einer Leitung befestigt werden kann, und mit einem mittleren Bereich (12), mit dem die Öffnung bis zu einem Berstdruck absperrbar ist, und mit Sollbruchlinien, entlang derer die Berstscheibe (1) bei einem Erreichen des Berstdruck aufreißt, so dass der mittlere Bereich (12) ganz oder in Teilen öffnet, wobei die Berstscheibe (1) im Randbereich (11) einen Umschlag aufweist, der einen ersten, umgeschlagenen Teil (111) des Blechs und einen zweiten Teil (112) des Blechs aufweist, zu dem der umgeschlagene Teil (111) parallel oder überwiegend parallel ist, und wobei der erste, umgeschlagene Teil (111) auf der Außenseite der Berstscheibe und der zweite Teil (112) auf der Innenseite der Berstscheibe vorgesehen ist.

## Beschreibung

Die vorliegende Erfindung betrifft eine eckige, insbesondere rechteckige Berstscheibe, die aus einem Blech hergestellt ist, mit einem Randbereich, mit dem die Berstscheibe an einer Öffnung eines Behälters oder einer Leitung befestigt werden kann, und mit einem mittleren Bereich, mit dem die Öffnung bis zu einem Berstdruck absperrbar ist, und mit Sollbruchlinien, entlang derer die Berstscheibe bei einem Erreichen des Berstdrucks aufreißt, so dass der mittlere Bereich ganz oder in Teilen öffnet.

Die Anmelderin stellt solche eckigen Berstscheiben her und vertreibt sie unter der Bezeichnung "EGV". Die EGV wird zum Beispiel in Anlagen mit Silos, Sprühtrocknern, Elevatoren, Trogkettenförderern, Sieben mit leichter Vibration, Behälter mit mechanischer Befüllung oder Zyklone eingesetzt, insbesondere bei drucklosen Prozessen und Prozessen mit geringem Unter- oder Überdruck. Mit der Berstscheibe kann ein Druckanstieg in Behältern oder Leitungen über den Berstdruck verhindert werden. Bei einem Druckanstieg über den Berstdruck öffnet die EGV an den definierten Sollbruchlinien und entlässt so den Druck aus dem Behälter oder der Leitung in die Umgebung.

Die EGV ist in ihrer derzeitigen Ausführung mehrteilig. Sie umfasst ein zugeschnittenes und umgeformtes Blech, das zwei umlaufende Sicken aufweist und vier sogenannte Aufsteckbleche, von denen je eines an einer Seite des Bleches aufgesteckt ist. Das Blech umfasst den mittleren Bereich und einen Teil des Randbereiches der Berstscheibe. Andere Teile des Randbereiches werden durch die Aufsteckleisten gebildet. In dem Blech sind die Sollbruchlinien vorgesehen, die beim Erreichen des Berstdrucks aufreißen. Die Aufsteckbleche sind im Querschnitt u-förmige Leisten mit einem sehr schmalen Steg, der ungefähr so breit ist wie das Blech dick, und mit Schenkeln unterschiedlicher Länge, die den Rand des Blechs umgreifen.

Für die Herstellung der EGV sind mehrere Arbeitsschritte notwendig. Zum einen wird in mehreren Arbeitsschritten das Blech hergestellt. Zum anderen werden in mehreren Arbeitsschritten die Aufsteckleisten hergestellt. So dann werden die Aufsteckleisten auf die Bleche ausgesteckt. Schließlich werden diese Aufsteckleisten dann noch dagegen gesichert, dass sie sich bei einem Transport oder bei der Montage der Berstscheibe von dem Blech lösen und womöglich verloren gehen oder beschädigt werden. Dazu werden derzeit Klammern eingesetzt, die ebenfalls hergestellt, montiert und am Ende wieder demontiert werden müssen.

Aufgrund der Vielzahl von Arbeitsschritten ist die Herstellung der EGV sehr aufwändig.

Aus den Dokumenten FR 2 943 043 A1 und FR 2 870 833 A1 sind Berstscheiben bekannt, bei denen die Berstscheibe im Randbereich einen Umschlag aufweist, der einen ersten umgeschlagenen Teil des Blechs und einen zweiten Teil des Blechs aufweist, zu dem der umgeschlagene Teil parallel oder überwiegend parallel ist. Ein solcher Umschlag wird von Fachleuten auch als Falz bezeichnet. Der umgeschlagene Teil liegt dabei auf der Innenseite der Berstscheibe. Zwischen dem ersten, umgeschlagenen Teil und dem zweiten Teil ist eine Dichtung angeordnet. Diese Dichtung ist notwendig, damit verhindert wird, dass ein Medium durch einen Spalt zwischen dem ersten Teil und dem zweiten Teil und in diesem Bereich vorgesehenen Löchern nach außen dringt.

Der Erfindung liegt daher die Aufgabe zugrunde, eine eckige Berstscheibe so zu gestalten, dass sie einfacher hergestellt werden kann.

Diese Aufgabe wird erfindungsgemäß dadurch gelöst, dass der erste, umgeschlagene Teil auf der Außenseite der Berstscheibe und der zweite Teil auf der Innenseite der Berstscheibe vorgesehen ist. Dadurch, dass der erste Teil auf der Außenseite der Berstscheibe liegt, ist es nicht möglich, dass ein Medium in einen Spalt zwischen dem ersten und dem zweiten Teil eindringt und von dort über Löcher für Befestigungsschrauben weiter nach außen dringt. Die bei den bekannten Berstscheiben vorgesehene Dichtung kann bei der erfindungsgemäßen Berstscheibe entfallen.

Bei einer erfindungsgemäßen Berstscheibe entfallen somit die Aufsteckleisten und der Randbereich der Berstscheibe wird durch das Blech gebildet, dessen Rand dazu umgeschlagen ist. Die Umformung des Blechs zur erfindungsgemäßen Berstscheibe ist dadurch aufwändiger als die Herstellung des Bleches der EGV allein. Dadurch, dass die Herstellung der Aufsteckleisten und die Montage der Aufsteckleisten an dem Blech entfällt, ist die Herstellung der Berstscheibe insgesamt aber weniger aufwändig. Die Berstscheibe kann so insbesondere an einem Arbeitsplatz aus einem Blech umgeformt werden und es müssen keine Teile, wie zum Beispiel Aufsteckleisten an einem anderen Arbeitsplatz hergestellt und zugeführt werden oder aus einem Vorrat zugeführt werden. Auch ist bei einer erfindungsgemäßen Berstscheibe keine Transportsicherung zum Sichern von Aufsteckleisten notwendig.

Bei einer erfindungsgemäßen Berstscheibe können in dem Umschlag Löcher vorgesehen sein, die für Schrauben zum Anschrauben der Berstscheibe an einem Rand der Öffnung geeignet sind.

Es ist möglich, dass bei einer erfindungsgemäßen Berstscheibe in dem ersten oder zweiten Teil ein erster Absatz vorgesehen ist. Ist der Absatz in dem ersten oder zweiten Teil vorgesehen, kann vom Rand der Berstscheibe ausgehend bis zu dem ersten Absatz zwischen dem ersten Teil und dem zweiten Teil ein Abstand vorgesehen sein, während dann ab dem ersten Absatz der erste Teil und der zweite Teil aneinander liegen können.

Eine erfindungsgemäße Berstscheibe kann in dem mittleren Bereich mit einem Abstand zu dem Umschlag einen zweiten Absatz aufweisen. Der zweite Absatz kann in gleiche Richtung gehen wie der erste Absatz. Es ist aber auch möglich, dass der zweite Absatz in die entgegengesetzte Richtung geht wie der erste Absatz. Anders als die Sicken, die in dem Blech der bekannten EGV vorgesehen sind, wird zum Herstellen der Absätze weniger Umformungsenergie aufgewendet. Das hat den Vorteil, dass sich das Blech beim Herstellen dieser Absätze im Gegensatz zu einem Blech der EGV, in dass die Sicken eingebracht werden, weniger ungewünscht verformt. In Folge der Umformung zum Einbringen der Sicken kann es nämlich dazu kommen, dass die Berstscheiben in einem nicht montierten Zustand nicht mehr plan sind, sondern sich ein so genannter Frosch ausbildet, was bedeutet, dass sich Ecken der Berstscheibe bzw. des Bleches aus der Ebene, die durch das Blech gebildet werden sollte, herausheben. Das hat zwar keinerlei Bedeutung für die Funktion der Berstscheibe, erschwert aber zumindest geringfügig die Montage der bekannten Berstscheibe.

Ein Ausführungsbeispiel der Erfindung wird unter Bezugnahme auf die Zeichnungen nachfolgend beschrieben. Es zeigen:
- Fig. 1: eine perspektivische Ansicht einer erfindungsgemäßen Berstscheibe,

- Fig. 1a: eine Draufsicht auf die Außenseite der Berstscheibe,

- Fig. 2: eine Ansicht eines Schnittes durch die Berstscheibe aus der gleichen Perspektive wie in Fig. 1,

- Fig. 3: einen Ausschnitt aus der Fig. 2 in vergrößerter Darstellung,

- Fig. 4: einen Ausschnitt aus einer Ansicht des gleichen Schnitts in einer Draufsicht,

- Fig. 4a: einen Ausschnitt aus einer Ansicht eines entsprechenden Schnitts in einer Draufsicht einer zweiten erfindungsgemäßen Berstscheibe und

- Fig. 4b: einen Ausschnitt aus einer Ansicht eines entsprechenden Schnitts in einer Draufsicht einer dritten erfindungsgemäßen Berstscheibe.

Es ist nicht notwendig, dass eine erfindungsgemäße Vorrichtung alle nachfolgend beschriebenen Merkmale aufweist. Es ist auch möglich, dass eine erfindungsgemäße Vorrichtung nur einzelne Merkmale des nachfolgend beschriebenen Ausführungsbeispiels aufweist.

Die Berstscheibe 1 ist aus einem Blech hergestellt, das dazu in besonderer Weise zugeschnitten ist. Dabei ist das Blech an den Ecken ausgeklinkt worden. Das Blech ist mittels eines Absetzwerkzeugs mit einem ersten Absatz 15 und einem zweiten Absatz 16 versehen. Der erste Absatz 15 ist weiter außen in das Blech eingebracht worden und der zweite Absatz 16 weiter innen. Außerdem sind Paare von Löchern 13 in das Blech eingebracht worden, wobei die Löcher 13 gleich groß sind. Die zwei Löcher 13 eines Paares liegen mit gleichem Abstand auf einer Linie senkrecht zu einer Geraden, entlang der das Blech zum Herstellen eines Umschlags um 180° abgekantet ist, um so einen Randbereich 11 des Bleches herzustellen. Nach dem Umschlagen liegen die Löcher 13 eines Paares übereinander und fluchten. Zusätzliche Löcher 14 sind in dem Blech an den Ecken vorgesehen. Alle diese Löcher 13, 14 dienen der Befestigung der Berstscheibe 1, die mit Schrauben, die durch diese Löcher 13, 14 hindurchgeführt werden können, an einem Behälter oder einer Leitung angeschraubt werden kann.

Innerhalb des Randbereichs 11 ist ein mittlerer Bereich 12 der Berstscheibe 1 gebildet, in dem der zweite Absatz 16 vorgesehen ist. Der erste Absatz liegt in dem Randbereich 11.

Durch den Umschlag sind im Randbereich 11 zwei Teile 111, 112 des Bleches gebildet, nämlich ein erster, umgeschlagener Teil 111 und ein zweiter, zu dem umgeschlagenen Teil 111 paralleler Teil 112. Der erste Absatz 15 ist in dem zweiten Teil 112 ausgebildet. Dadurch gibt es einen Bereich, in dem der erste Teil 111 und der zweite Teil 112 einen Abstand voneinander haben, und einen weiter innen liegenden Bereich, in dem der erste Teil 111 und der zweite Teil 112 aneinander liegen. In diesem Bereich, in dem der erste Teil 111 und der zweite Teil 112 aneinander liegen, sind Sollbruchlinien (nicht dargestellt) vorgesehen, entlang derer die Berstscheibe 1 bei Erreichen eines Berstdrucks aufreißt und öffnet.

In der Praxis kann es sein, dass der erste Teil 111 und der zweite Teil 112 in Bereichen zwischen dem Umschlag und dem Absatz 15 aneinander liegen. Dazu können diese Bereiche gegeneinander gewölbt sein, insbesondere dort, wo die Löcher 13 vorgesehen sind, aber auch in einem an der Falz angrenzenden Bereich. Diese Wölbung kann schon bei der Herstellung der Berstscheibe hergestellt werden, zum Beispiel beim Falzen. Es ist aber auch möglich, dass die Wölbung erst bei der Montage der Berstscheibe entsteht, wenn durch die Löcher 13 geführte Schrauben angezogen und dadurch der ersten Teil 111 und der zweite Teil 112 gegeneinandergedrückt werden.

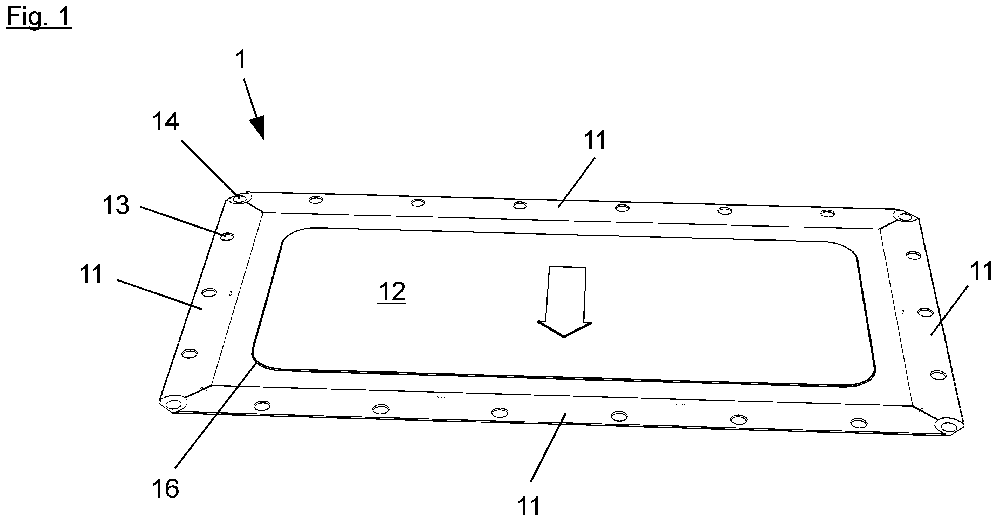

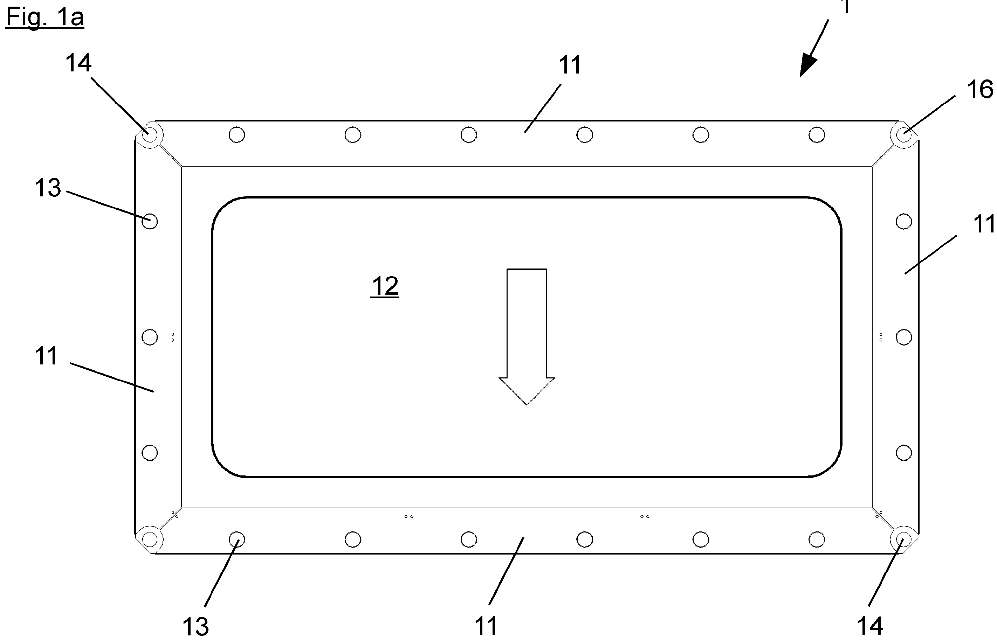

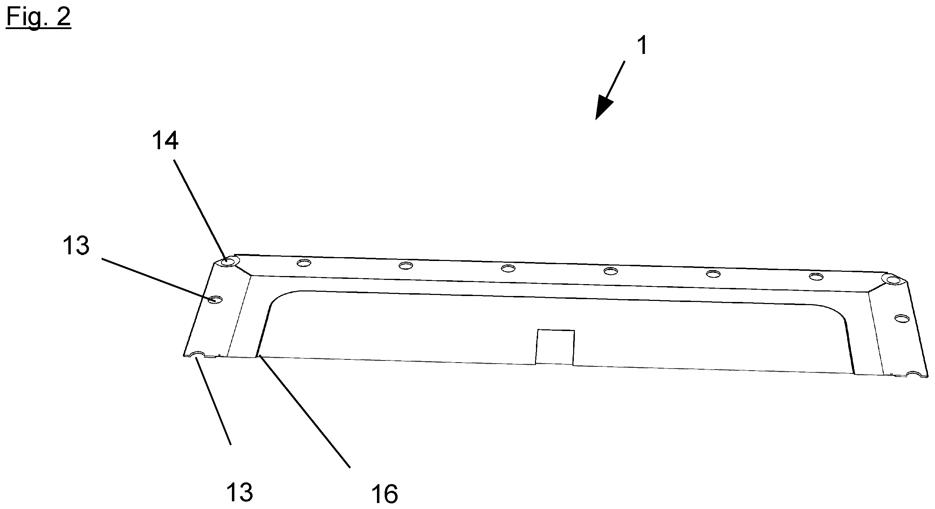

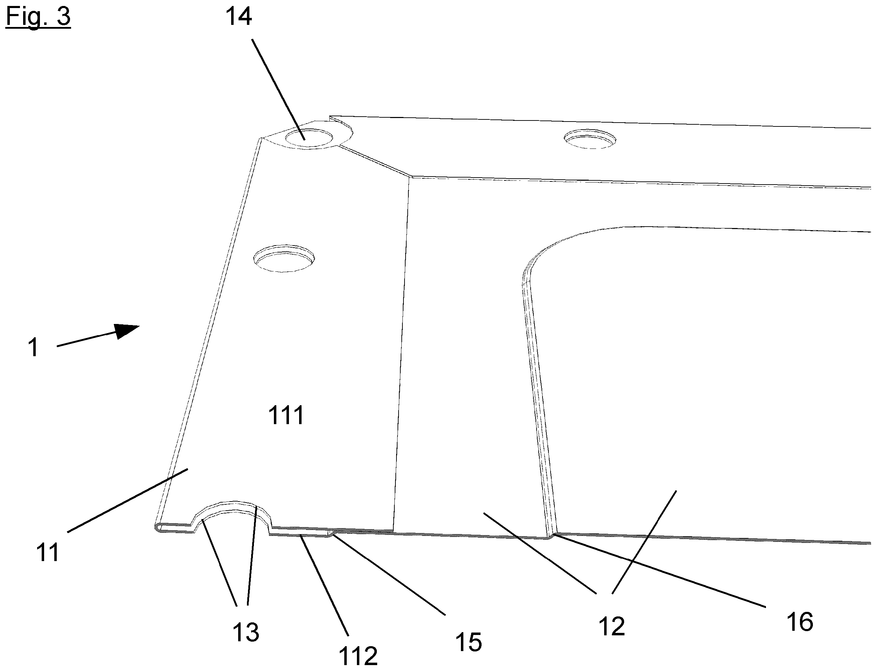

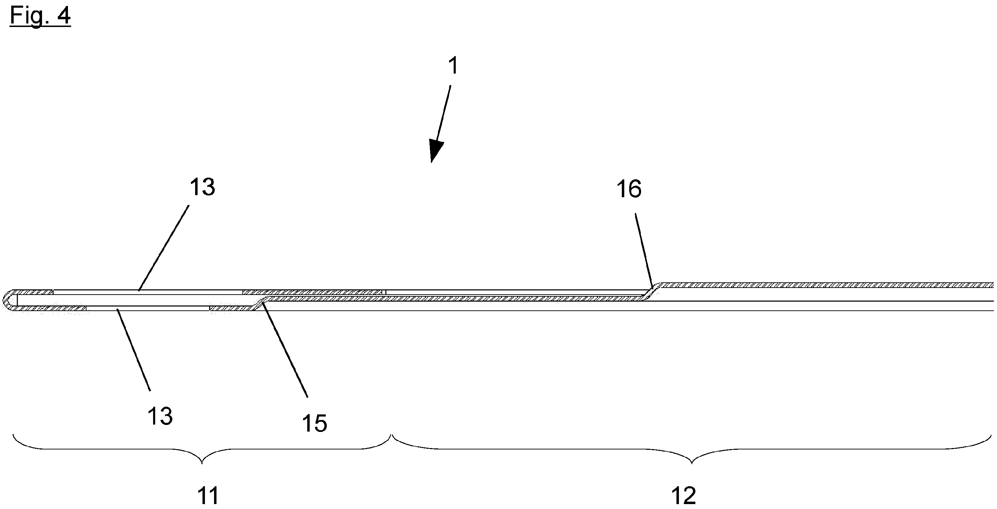

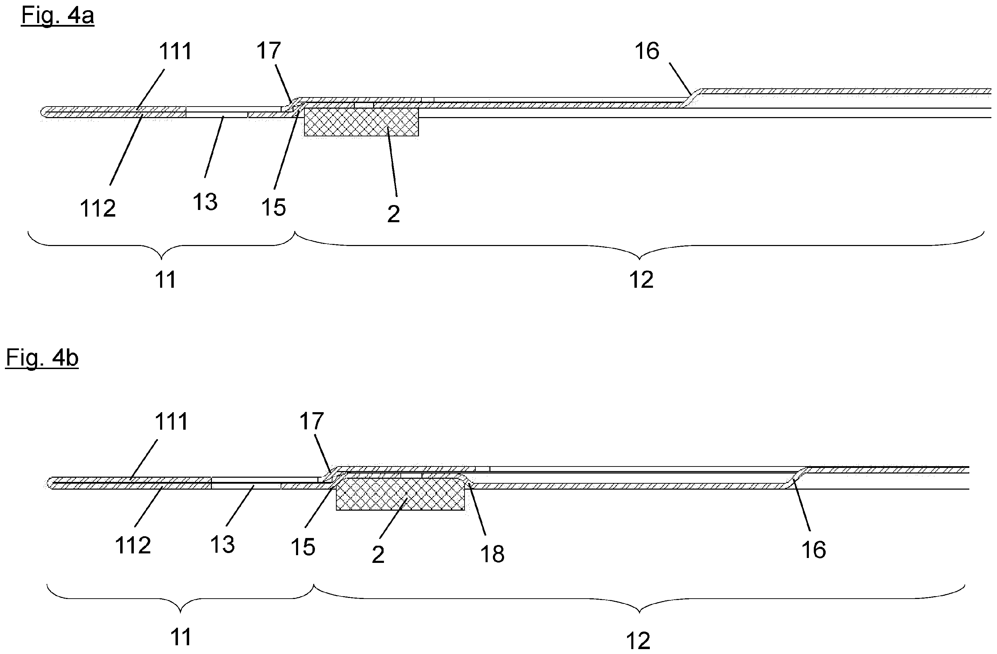

Sowohl bei der zweiten Berstscheibe nach der Fig. 4a als auch bei der Berstscheibe nach der Fig. 4b, die abgesehen von den dargestellten Unterschieden der Berstscheibe nach den Figuren 1 bis 4 entsprechen, liegen der erste Teil 111 und der zweite Teil 112 aneinander. Dazu ist bei der zweiten Berstscheibe nach Fig. 4a und auch bei der dritten Berstscheibe nach Fig. 4b im ersten Teil 111 des Randbereichs 11 ein dritter Absatz 17 mittels eines Absetzwerkzeugs gebildet, der sich an den ersten Absatz 15 anschmiegt. Der erste Absatz 15 und der dritte Absatz 17 können in einem Arbeitsgang hergestellt werden, wenn zuvor der Umschlag hergestellt ist.

Bei der dritten Berstscheibe ist im ersten Bereich zusätzlich zu dem ersten Absatz 15, dem zweiten Absatz 16 und dem dritten Absatz 17 im zweiten Teil 112 des Randbereichs 11 ein vierter Absatz 18 vorgesehen, der dem ersten Absatz 15 entgegengerichtet ist. Dadurch wird im zweiten Teil 112 des Randbereichs 11 eine umlaufende Vertiefung gebildet.

Bei den drei dargestellten Berstscheiben 1 kann an den ersten Absatz 15 angrenzend an dem zweiten Teil 112 des Randbereichs 11 eine Dichtung 2 angeordnet werden, die bei einer Montage der Berstscheibe 1 an dem Rand einer zu verschließenden Öffnung anliegt und einen Spalt zwischen der Berstscheibe 1 und dem Rand der Öffnung abdichtet. Durch den ersten Absatz 15 wird verhindert, dass diese Dichtung 2 bei der Montage so stark komprimiert wird, dass sie beschädigt wird und dann ihren Zweck zur Abdichtung womöglich nicht mehr erfüllt. Bei der Dichtung 2 kann es sich um einen Dichtungsstreifen handeln, der auf den zweiten Teil 112 aufgeklebt ist. Es kann sich alternativ auch um eine geschäumte Dichtung 2 handeln, die angespritzt ist. Bei der dritten Berstscheibe 1 ist durch die umlaufende Vertiefung der Ort beidseitig begrenzt, in dem die Dichtung 2 angeordnet sein kann.

## Patentansprüche

1. Eckige, insbesondere rechteckige Berstscheibe (1), die aus einem Blech hergestellt ist, mit einem Randbereich (11), mit dem die Berstscheibe (1) an einer Öffnung eines Behälters oder einer Leitung befestigt werden kann, und mit einem mittleren Bereich (12), mit dem die Öffnung bis zu einem Berstdruck absperrbar ist, und mit Sollbruchlinien, entlang derer die Berstscheibe (1) bei einem Erreichen des Berstdruck aufreißt, so dass der mittlere Bereich (12) ganz oder in Teilen öffnet, wobei die Berstscheibe (1) im Randbereich (11) einen Umschlag aufweist, der einen ersten, umgeschlagenen Teil (111) des Blechs und einen zweiten Teil (112) des Blechs aufweist, zu dem der umgeschlagene Teil (111) parallel oder überwiegend parallel ist
**dadurch gekennzeichnet, dass**
der erste, umgeschlagene Teil (111) auf der Außenseite der Berstscheibe und der zweite Teil (112) auf der Innenseite der Berstscheibe vorgesehen ist.

2. Berstscheibe nach Anspruch 1, **dadurch gekennzeichnet, dass** in dem Umschlag Löcher (13) vorgesehen sind, die für Schrauben zum Anschrauben der Berstscheibe (1) an einem Rand der Öffnung geeignet sind.

3. Berstscheibe nach Anspruch 1 oder 2, **dadurch gekennzeichnet, dass** in dem zweiten Teil (112) des Blechs ein erster Absatz (15) vorgesehen ist.

4. Berstscheibe nach Anspruch 3, **dadurch gekennzeichnet, dass** vom Rand der Berstscheibe (1) ausgehend bis zu dem ersten Absatz (15) zwischen dem ersten Teil (111) und dem zweiten Teil (112) ein Abstand vorgesehen ist und dann ab dem ersten Absatz (15) der erste Teil und der zweite Teil aneinander liegen.

5. Berstscheibe nach einem der Ansprüche 1 bis 4, **dadurch gekennzeichnet, dass** die Berstscheibe (1) in dem mittleren Bereich (12) mit einem Abstand zu dem Umschlag einen zweiten Absatz (16) aufweist, wobei zwischen dem Rand der Berstscheibe und dem zweiten Absatz (16) der erste Absatz (15) vorgesehen ist.

6. Berstscheibe nach Anspruch 5, **dadurch gekennzeichnet, dass** der zweite Absatz (16) vom Rand der Berstscheibe in Richtung zum Zentrum der Berstscheibe betrachtet in die gleiche Richtung geht wie der erste Absatz (15).

7. Berstscheibe nach Anspruch 5, **dadurch gekennzeichnet, dass** der zweite Absatz (16) vom Rand der Berstscheibe in Richtung zum Zentrum der Berstscheibe betrachtet in die entgegengesetzte Richtung geht wie der erste Absatz (15).
